# EUROPEAN PATENT SPECIFICATION

(11) **EP 1 366 345 B1**
(45) Date of publication and mention of the grant of the patent: **25.04.2012**
(21) Application number: 02722048.2
(22) Date of filing: 06.02.2002
(51) Int. Cl.: G01L 3/10, G01L 1/12

(54) **LONGITUDINALLY-MAGNETISED TRANSDUCER ELEMENT**
LONGITUDINAL MAGNETISIERTES WANDLERELEMENT
ELEMENT TRANSDUCTEUR MAGNETISE LONGITUDINALEMENT

(30) Priority: 07.02.2001 GB 0103036
(43) Date of publication of application: 03.12.2003
(73) Proprietor: ABAS Incorporated, Chicago, Illinois 60706 (US)
(72) Inventor: MAY, Lutz, Axel, 82538 Gelting (DE)
(74) Representative: Grünecker, Kinkeldey, Stockmair & Schwanhäusser
(86) International application number: PCT/EP2002/001225
(87) International publication number: WO 2002/063262

(56) References cited:
- WO-A-01/13081
- WO-A-99/56099

## Description

### FIELD OF THE INVENTION

This invention is concerned with magnetic transducer technology and more particularly to a form of magnetisation which we have developed for magnetic transducer elements and which is referred to as longitudinal magnetisation. The nature of this magnetisation is discussed further below.

The invention relates to a method of and apparatus for producing a transducer element having a longitudinally magnetised region, and to a transducer element.

### BACKGROUND TO THE INVENTION

Magnetic transducer technology finds application in the measurement of torque and force. It has been especially developed for the non-contacting measurement of torque in a shaft or other part subject to torque. The invention will now be discussed in relation to torque in a shaft. A magnetised transducer element is applied to the shaft so as to have torque in the shaft transmitted to the element. The element emanates a magnetic field which is a function of torque and which can be sensed by a non-contacting sensor arrangement. One more recent development of this kind of technology is to apply the transducer element as an integral portion of the shaft. The integral portion is magnetised (subject to a permanent or remanent magnetisation also referred to as stored magnetisation) in one of a number of ways to produce the torque-sensitive field. One proposal for producing a form of longitudinal magnetisation suitable for this purpose disclosed in published International patent application WO01/13081 is to dispose the intended transducer element within a helical coil. The coil is electrically energised to magnetise the portion of the shaft or the part within it. WO01/13081 is further discussed below.

A proposal to magnetise a shaft or a portion of it within a helical coil is disclosed in published International Patent Application WO99/56099. The magnetisation of at least a portion of a shaft by this means is described in the context of producing a general lengthwise magnetisation of the shaft which may be used directly as a transducer element in respect of responding to forces acting to bend or flex the shaft or as a magnetic base on which to impress circumferential magnetisation (also known as circular magnetisation) whose properties and characteristics are described in WO99/56099 and other documents referred to therein. Circumferential magnetisation is an established form of magnetisation of magnetic transducer elements.

As already discussed above, WO99/56099 discloses no more than a general form of lengthwise magnetisation within a helical coil followed by circumferential magnetisation, if desired, by a separate magnetic source. The material of the shaft is ferromagnetic and sufficiently magnetically hard to retain the magnetisation impressed on it. It is a characteristic of circumferential magnetisation that the active region of the transducer element lies in an annulus extending inwardly, to a lesser or greater extent, from a circular surface with the magnetisation being formed in a closed loop around the circular surface. That is the direction of magnetisation extends circumferentially about the element.

In contrast to circumferential magnetisation, a new annular form of magnetisation was subsequently developed in which the direction of the magnetisation is longitudinal, that it is in the direction of the axis of the annulus. WO01/1308 mentioned above describes how to generate such an annulus using permanent magnets as the magnetic source. It is a characteristic of the longitudinal magnetisation described in WO01/13081 that the magnetic field due to the remanent magnetisation of the surface-adjacent annulus is primarily closed within the material of the transducer element, thereby forming a toroid of magnetic flux; and that there is an external annulus of magnetic flux which is also longitudinal, that is generally axially-directed. It is also a characteristic of this form of longitudinal magnetisation that when the shaft or other part incorporating the transducer element is put under torque about the axis of the annulus of the magnetisation, the annulus emanates an external tangential or circumferentially-directed magnetic field component whose magnitude is a function of the applied torque and which is capable of being sensed by a non-contacting sensor arrangement.

While the means of generating the longitudinal magnetisation outlined in the foregoing paragraph is described as a permanent magnet source, as indicated above, an alternative means of achieving the required annulus of magnetisation is disclosed: this alternative is a helical coil.

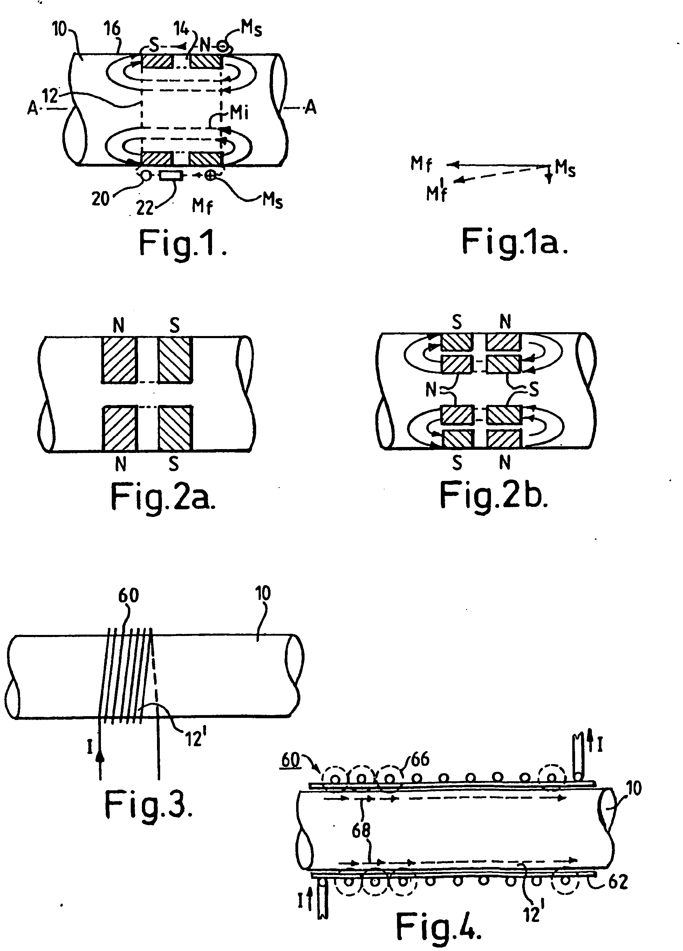

Reference is now made to Figures 1 to 4 of the accompanying drawings which illustrate circumferential-sensing longitudinal magnetisation and the use of an energised helical coil as a means of realising it.

Figure 1 shows a shaft 10 of circular cross-section and of ferromagnetic material, and specifically of a relatively hard magnetic material capable of being magnetised to retain or store an applied magnetisation. The shaft 10 is intended to transmit torque applied about the longitudinal axis A-A of the shaft. An integral portion 12 of the shaft is magnetised to provide a transducer element. The shaft is shown as solid but may have a bore therethrough provided that the requisite toroid of magnetic flux can be established.

The portion 12 is longitudinally magnetised, that is subject to a permanent magnetisation which lies in the direction of the axis of the shaft, by the means to be described with reference to Figures 3 and 4. The longitudinal magnetisation extends annularly about axis A-A in a zone 14 which extends inwardly from shaft surface 16. The magnetisation procedure produces axially-spaced North and South poles, N and S. The magnetic flux generated by the annular magnetisation and extending through zone 14 closes primarily in a radially internal path Mi within the shaft so that a toroid of flux is established. In addition to this internal flux there is an external flux component Mf in the ambient surrounding the shaft (assumed to be air). The external flux itself forms an annulus about the shaft. This flux is oriented axially, i.e. in alignment with the axis A-A.

When the shaft and thus the transducer element 12 is subject to torque, the flux component Mf is deflected skewed as is exaggeratedly shown by Mf ' in Fig. 1a, and there results a tangentially- or circumferentially-directed component of flux Ms which is illustrated as being into the plane of the drawing at the top of Figure 1 and out of the plane of the drawing at the bottom. Fig. 1a is a vector diagram of the emanated magnetic field under torque. The direction of the field component Ms depends on the direction of the applied torque and can be sensed by a sensor (or arrangement of sensors) 20 that is tangentially oriented. The axial component can also be sensed by an axially oriented sensor (or arrangement of sensors) 22 to provide a reference against which the tangential component can be in measured.

Various types of magnetic field sensor may be used including Hall-effect devices, magneto-resistive devices and saturating inductor devices, and particularly a signal conditioning circuit for one or more saturating inductor devices such as disclosed in WO98/52063. Further details on the above longitudinal magnetisation and its practical utilisation are to be found in WO01/13081 incorporated herein by reference.

The torque-dependent component Ms is zero at zero-torque but if the longitudinal magnetisation is created while the element 12 is under torque a non-zero value of Ms results at zero-torque. This technique is known as pre-torquing and is further described in published International Application WO00/57150.

There is a further development of the above described annulus of longitudinal magnetisation for use as a magnetic transducer element. This development is illustrated in Figures 2a and 2b which correspond to Figures 8a and 8b of above-mentioned WO01/13081.

The flux pattern illustrated in Figure 1 may be referred to as a one or single phase magnetisation. It may be desirable, for greater certainty and control of measurement, to undertake a two phase magnetisation procedure in which the state of magnetisation of the cross-section of the shaft is better defined. This is illustrated in Figure 2a which shows a first phase of deeper magnetisation of the shaft to produce an initial given axial polarity of magnetisation.

The deeper magnetisation requires a stronger applied magnetic field so as to saturate a greater depth of material and leave a greater depth with remanent magnetisation. A second phase of magnetisation is then undertaken by applying a magnetic field of opposite polarity to that of the first phase and whose strength is chosen so as to saturate lesser depth of material and leave an outer annular zone of one polarity and an inner annular zone of opposite polarity located radially inwardly of the outer zone as illustrated in Figure 2b. The two annular zones close their magnetic flux paths through one another, aiding in achieving a stable, well defined magnetic state. The magnetic flux lines again define a toroid within the shaft. A stable well-defined external fringing flux will be established.

Turning now to the alternative magnetising arrangement illustrated in Figures 3 and 4, these figures correspond to Figures 9 and 10 respectively of WO01/13081. In that earlier specification Figures 3 and 4 are described in the following terms.

Figure 3 illustrates magnetising arrangement which may be used to magnetise a shaft in a single or a two phase manner. In Figure 3 the shaft 10 is enclosed by a coil 60 coaxial with the shaft in the manner of a solenoid coil. The coil will have an axial dimension appropriate to the axial length of the region to be magnetised. Energising the coil from a current source (I) generates a longitudinal magnetic field to longitudinally magnetise the region within the coil, the polarity of the current in the coil determining the polarity of the magnetisation.

The depth of magnetisation is controllable by controlling the strength of the current I. This control can be exercised to perform two phase magnetisation. For example a coil for magnetising a steel shaft in accord with Figure 2a was energised with a direct current of 20A for the first phase and a current opposite polarity of 5A for the second phase.

The action of the magnetic field generated by the coil 60 on the material of the shaft can be better appreciated from the diagram of Figure 4 which shows an axial cross-section. The shaft 10 has the portion 22 of it to be magnetised received within a close fitting former 62 on which the coil is wound, that is the coil inside diameter closely matches the shaft diameter. Figure 4 illustrates the magnetic field 66 associated with individual coil turns 64 (it is only shown for some turns). The individual field components combine at and adjacent the surface of the portion 22 as indicated by arrows 68 to produce a longitudinal magnetisation of the surface zone. The depth to which this zone extends depends on the current applied to the coil 60. Thus in achieving the magnetisation of Figure 2a a large current pulse of one polarity is initially applied and to achieve a second phase of magnetisation as in Figure 2b a small current pulse of the opposite polarity is applied. It is to be noted that the current pulses need to be of only short duration.

There now follows a discussion of the development of the relevant technology as it is now understood.

It has to be stated that investigating magnetic fields within a solid material is not easy. Subsequent investigation of one and two phase magnetisation induced using an energised helical coil as the magnetic source has revealed the following potential deficiencies. Firstly with a single phase type of magnetisation to produce a single surface adjacent annular magnetised zone, it may not be possible to achieve a magnetised zone that can be clearly defined as annular. What the single phase of magnetisation may produce is more in the nature of a general longitudinal magnetisation akin to a bar magnet. Furthermore this magnetisation is not stable for torque measurement purposes.

Secondly, in a two phase magnetisation, the magnetisation produced by the first radially deeper phase is subject to the deficiency above noted. The second phase produces a surface adjacent zone which is annular and on the face of it should provide circumferential-sensing longitudinal magnetisation as previously described. However, it has now been discovered that the annular surface zone is not stable and tends to deteriorate rapidly upon torque being applied.

### SUMMARY OF THE INVENTION

The present invention sets out to provide a solution to this last-mentioned problem. The present invention proposes that at least during the second phase of magnetisation the transducer portion be rotated about its axis. The addition of this measure has been found to "fix" the annulus of magnetisation so as to be stable under torque and therefore suitable as a transducer for measuring torque.

Preferably in practising the invention, the intended transducer element region is subject to a magnetic cleansing or de-gaussing procedure, which still more preferably extends to regions adjoining the intended transducer element region.

The concept of effecting relative rotation between the transducer region and the magnetising coil while magnetisation of the transducer region is performed may be applied to a transducer element provided by single phase magnetisation, such as the element 12 of Fig. 1 However, it is preferred that transducer elements be formed using the two phase procedure.

Aspects and features of this invention for which protection is sought are set forth in the claims following this description.

The invention and its practice will be further described with reference to Figures 5, 6 and 7 of the accompanying drawings.

### BRIEF DESCRIPTION OF THE DRAWINGS

Figure 1 shows a shaft incorporating a longitudinally magnetised transducer region and Fig. 1a is a vector diagram of the flux emanated under torque;
Figures 2a and 2b illustrate a two-phase magnetisation procedure for obtaining an annular zone of magnetisation within a deeper region of magnetisation;
Figure 3 shows a magnetising arrangement (magnetic source) for the shaft using an axially-extending coil within which the shaft to be magnetised is located;
Figure 4 shows fields generated by the coil of Figure 3 to obtain the two-phase magnetisation of Figures 2a and 2b;
Figure 5 illustrates the magnetisation of the shaft in a two-phase procedure in accordance with the present invention;
Figure 6 illustrates apparatus for magnetically cleansing the shaft prior to longitudinal magnetisation of the transducer region; and
Fig 7 is a flow diagram of a preferred process for two-phase magnetisation.

### DESCRIPTION OF THE PREFERRED EMBODIMENTS

Reverting firstly to Figures 3 and 4, it is not unreasonable to consider that since the flux pattern due to the energising current is the same all the way around the coil 60, the resultant magnetisation is an annulus particularly the outer annulus of the two-phase magnetisation procedure wherein an initially established direction of magnetisation is to be reversed. However, as discussed above the procedure applied with a stationary shaft does not lead to the long term stability of the magnetised transducer element required for practical measurement use.

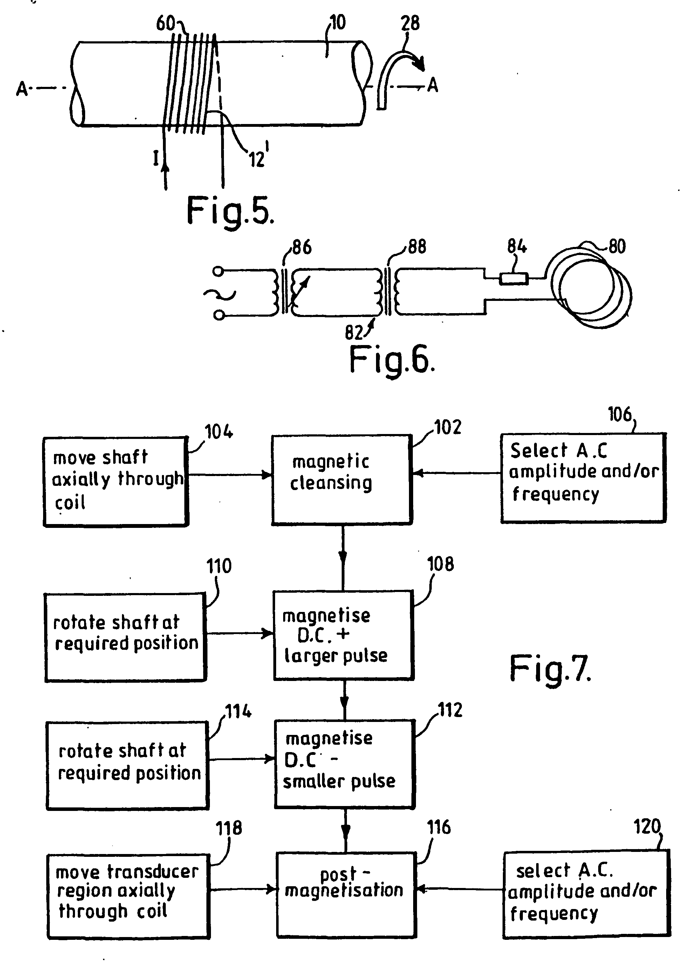

Figure 5 shows the additional measure of rotating the ferromagnetic shaft 10 and thus the transducer region 12' of Figure 3 about its axis A-A as indicated by arrow 28 while performing the two-phase magnetisation procedure previously discussed. The direction and speed of rotation is not critical. The applied currents may themselves be of short duration. Rotational speeds of 30 r.p.m. to 600 r.p.m. have been successfully employed. The effect of rotating the shaft is to "fix" the magnetised surface-adjacent annular zone in a stable form. As already indicated the reason for this result is not presently known.

Using the feature of rotation of the transducer element, magnetisation of a shaft has been performed with first and second phase current of 10A and 1A respectively for a shaft of 15 mm diameter. Conveniently the relative rotation between the shaft and the coil is effected by rotating the shaft within a stationary coil. The shaft may be supported for rotation in a lathe or other similarly acting machine.

The coil used in the magnetisation process has been shown in Fig. 4 as being a single layer helix. It is possible to use a multi-layer coil which may assist in obtaining a good depth of magnetisation in the first stage or shot of the procedure. There will be practical limits on the number of layers usable to provide a worthwhile benefit. As the multi-layer thickness piled about the surface increases, the magnetic effect on the shaft of the outer layer decreases; and the resistance of the increased total length of wire may itself limit the current carrying capacity and the magnetomotive force generated by the coil.

If a coil comprising a number of layers of turns is employed, it may be desirable to use only the inner layer or a lesser number (than the total) of the inner layers of the coil adjacent the shaft for the second stage or shot to reverse the magnetisation of the surface adjacent annular zone which provides the effective transducer region. To this end the multi-layer coil may be appropriately tapped and the inner layer(s) selected for the second stage.

It will be understood that the teachings of this invention can be applied to the creation of more than one transducer element as is discussed in aforementioned application WO01/13081 or to the creation of keeper or guard regions as is also discussed in that application.

In order to achieve optimum transducer performance in terms of consistent and repeatable measurements, it is first desirable to subject the shaft, or at least that part of it relevant to the region or regions to be magnetised, to a pre-magnetisation process by which the shaft is magnetically cleansed. One form of apparatus suitable for magnetic cleansing is shown in Figure 6. The pre-magnetisation process to be described is applicable to a shaft or other sensor host in which the required magnetised regions are to be formed. The process to be described will demagnetise or de-gauss a shaft in which unknown magnetic field patterns may have been established.

The shaft as received may have been subject to various mechanical and/or heat treatment operations which differentially affect the magnetic domains within the material. It may have been subject to and have acquired undefined magnetic fields. Such unknowns will be deleterious to transducer performance. Thus in most cases the shaft is to be put through a pre-magnetisation procedure to put it into a magnetically-defined state which has been referred to above as magnetically cleansed.

The degree of demagnetisation required is partially dependent on the magnetisation to be applied thereafter. For example if the magnetic programming to create the transducer element uses a relatively low level of magnetic field strength, the more important it becomes to completely demagnetise the sensor host. In this context magnetic cleansing means that the de-gaussing or demagnetisation procedure results in that the magnetic direction of the individual grains of the shaft material is random so that no grouping of magnetic domains in any particular direction exists. The existence of magnetic domain grouping to provide some organised magnetic orientation of individual grains leads to deficiencies in the magnetised transducer element. For example, increased offsets of the measured magnetic signal; non-uniformity of the signal as a function of the rotational angle of the shaft; and lower stability over time of the transducer element.

The magnetic cleansing should extend well beyond the region at which the magnetised transducer element is to be formed, e.g. preferably the whole shaft should be demagnetised so that there are no undefined local magnet systems in the sensor host. In particular "bar-magnet" formations parallel to the shaft axis may travel over time within the shaft to affect the sensor specification on an ongoing basis. The guard fields described in WO01/13081 provide a measure to mitigate this possibility if such unwanted fields remain even despite magnetic cleansing.

Figure 6 illustrates an apparatus for magnetic cleansing. It comprises a demagnetising coil 80 would in hollow solenoid fashion, a mains powered transformer arrangement 82 and a current limiter 84. For an 18 mm. diameter shaft a suitable coil was about 300 turns of about 30 cm. diameter of a heavy current carrying capacity cable. The outer conductor of a heavy coaxial cable coiled into a solenoid coil proved to be suitable. The transformer arrangement 82 comprises a variable transformer 86 connected to a 110 or 240 VAC mains AC supply. This is in turn connected to an isolation transformer 88 capable of safely delivering 10 amperes or more at its secondary at voltages at up to say 48V. The coil 80 is connected to the secondary of transformer 88 through the current limiter 84 which may be a resistor, e.g. a power rheostat, or more elaborate electronic device. The current limiter may be omitted provided steps are taken to monitor the current through the coil. A typical coil resistance would be about 100 milliohms. The variability of the transformer arrangement enables the current to be controlled as desired.

The coil 80 is energised and the full length of the shaft is passed through the coil while the coil is energised at 8-10A. This produces a de-gaussing field of about 1 kGauss. Typically one is looking to achieve fields in the 500-1200 Gauss range. The shaft may be mounted on a movable jig to move it along the axis of the coil and the movement continues as the far end of the shaft leaves the coil so that the field to which the shaft is subjected gradually decreases. There may be other ways of achieving the de-gaussing procedure including control of the coil current as a function of the axial position of the shaft with respect to the coil.

Following the magnetisation procedure described above with reference to Figure 5, a post-magnetisation step may be performed in the same manner as the pre-magnetisation procedure but at a lower level of magnetic field.

In the post-magnetisation procedure, the now magnetised shaft is again passed axially through the energised solenoid coil 80. However, the AC current through the coil is of an order of magnitude lower than for the pre-magnetisation procedure. In the pre-magnetisation example given above, the 8-10A current employed for pre-magnetisation is reduced to say 0.5-1A for post magnetisation. The current is at a value which does not change the basic magnetic pattern sought to be established but, as best can be surmised, it reduces or knocks-back parasitic fields that may be present after the magnetisation procedure. It has been found that the post-magnetisation step improves the uniformity of the output signal with rotation of the shaft, offsets over time and the final sensor stability generally.

The pre-magnetisation and post-magnetisation procedures so far discussed have mentioned the use of different levels of current in the same coil used for both stages. The depth to which the A.C. magnetic field penetrates the shaft material is also a function of frequency: depth of penetration varies inversely with frequency. The local power frequency 50 or 60 Hz is obviously a convenient frequency to use. However to improve depth of penetration in the pre-magnetisation stage to magnetically cleanse the shaft, it is desirable to use a lower frequency, say 30 Hz down to 10 Hz. For convenience of frequency generation at the required current it may be easier to use the local power supply in a fashion that generates a submultiple of its frequency. Conversely, for the post-magnetisation stage the local power frequency may be employed or a higher frequency. Thus consideration is given in the post-magnetisation and pre-magnetisation stages to both selection of current and/or frequency.

It has been found that the whole process from pre-magnetisation to post-magnetisation may be performed using the same helical coil throughout whose axial dimension is appropriate to the transducer region. The helical coil may be a single layer or two layers, with possibly switching between the number of layers used. As pointed out above, there is a decreasing benefit in increasing the number of layers used in the magnetisation stages.

Fig. 7 is a flow diagram illustrating the full magnetisation process 100 as discussed above using a single coil for all stages. The shaft and coil interior hollow are of circular cross-section with the shaft a close fit in the coil but both axially-movable and rotatable therein.

In Fig. 7, a ferromagnetic shaft (or other part) is subject to magnetic cleansing or de-gaussing at step 102 by moving 104 the shaft axially through a helical coil of at least one layer while the coil is energised 106 with an alternating current of selected amplitude and frequency. The coil is a close fit to the outside circumference of the shaft. The shaft is then subject to the first stage 108 of the magnetisation procedure in which the shaft is axially-positioned in the coil to select the region 12' in which the transducer element is to be formed and is rotated 110 in the coil about its axis (this is usually the more convenient way of effecting relative rotation). During rotation the coil is energised with a current pulse at a given polarity, indicated as + in Fig. 7. The resultant magnetic field saturates the region 12' to a relatively large depth.

The coil is now subject at step 112 to a D.C. magnetisation pulse of lower magnitude and of opposite polarity, indicated as -, while still rotating the shaft at the same axial position 114. This pulse saturates the shaft material at region 12' to a lesser depth than the pulse in step 108 and reverses the remanent magnetisation of an outer annular zone of the shaft to produce a magnetisation such as diagrammatically illustrated in Fig. 2b.

Current pulses for the practice of this invention may be generated by capacitor discharges, i.e. by switching a charged capacitor to discharge through the coil. The capacitor size and the voltage to which it is charged are selected to produce the required current in the coil having regard to the characteristic of the coil circuit, usually predominantly resistive.

Subsequently to steps 108 and 112 the shaft is subjected to a post-magnetisation step 116 to assist in establishing a stable magnetisation of the transducer region and without destroying the desired magnetic pattern in the transducer region established by the two magnetisation stages 108 and 112. The shaft is preferably moved axially 118 with respect to the coil so that the influence of this step extends to regions adjoining the transducer region. The post-magnetisation current is selected 120 to be less than that of the pre-magnetisation step 102 and may be performed at a higher frequency.

## Claims

1. A method of producing a transducer element (12) having a region (12') of remanent magnetisation that is longitudinally magnetised, comprising:
locating a ferromagnetic region (12') of a shaft (10) or other part within a coil (60) extending along an axis (A);
**characterized by**
a) applying a direct current of a given polarity to said coil; and
b) after step a) applying a direct current of opposite polarity to and of a lower magnitude than the current applied in step a) to said coil; and
effecting relative rotation of said region and said coil about said axis at least during step b).

2. A method as claimed in claim 1 in which said coil is a helical coil.

3. A method as claimed in claim 1 or 2 in which said region is subject to a magnetic cleansing or de-gaussing procedure before being subjected to step a).

4. A method as claimed in claim 3 in which said magnetic cleansing or degaussing procedure is performed by passing said region through a coil which is energised with alternating current.

5. A method as claimed in claim 3 in which said magnetic cleansing or degaussing procedure is performed by passing said region through said coil, the coil being energised with alternating current.

6. A method as claimed in claim 4 in which after steps a) and b), said region is passed through a coil which is energised with alternating current at a lower magnitude and/or a higher frequency than that of the current employed in said magnetic cleansing or de-gaussing procedure.

7. A method as claimed in claim 5 in which after steps a) and b), said region is passed through said coil, the coil being energised with an alternating current at a lower magnitude and/or higher frequency than that of the current employed in said magnetic cleansing or degaussing procedure.

8. Apparatus for producing a transducer element having a region of remanent magnetisation that is longitudinally magnetised, comprising:
a coil extending along an axis;
means for supporting the region of a shaft or a part in which a transducer element is to be produced within the coil, said supporting means being capable of effecting relative rotation between said region and the coil about said axis; and
means for energising said coil, while said relative rotation is being effected, with a first direct current of a given polarity and higher magnitude followed by a second direct current of opposite polarity and lower magnitude respectively.

9. Apparatus as claimed in claim 8 in which the coil is a helical coil.

10. Apparatus as claimed in Claim 8 in which said means for supporting is operable to move the shaft or the part axially relative to the coil axis.

11. A transducer element (12) in a shaft (10) or other part, the element having a region (12') of stored magnetisation that is longitudinally-magnetised, the region having a first annular zone extending inwardly from an annular surface, said first zone being longitudinally magnetised with a given polarity in the direction of an axis (A) about which the annulus extends, and a second zone located inwardly of said first zone and magnetised in the direction of said axis with opposite polarity to said first zone, said first annular zone retaining its longitudinal magnetisation when subject to repeated applications of torque about said axis, and said transducer element being produced by a method as claimed in any one of claims 1-7.

12. A transducer element as claimed in claim 11 in which said longitudinal magnetisation emanates an external tangentially-or circumferentially-directed magnetic field component as a function of torque.

## Patentansprüche

1. Verfahren zum Herstellen eines Wandlerelementes (12), das einen Bereich (12') mit Restmagnetisierung aufweist, der in Längsrichtung magnetisiert ist, wobei das Verfahren umfasst:
Lokalisieren eines ferromagnetischen Bereiches (12') einer Welle (10) oder eines anderen Teils innerhalb einer Spule (60), die sich entlang einer Achse (A) erstreckt;
**gekennzeichnet durch**
a) Anlegen eines Gleichstroms einer gegebenen Polarität an die Spule; und
b) nach Schritt a) Anlegen eines Gleichstroms, der zu dem in Schritt a) an die Spule angelegten Strom entgegengesetzte Polarität und eine niedrige Stärke als dieser hat; und
Bewirken relativer Drehung des Bereiches und der Spule um die Achse wenigstens während Schritt b).

2. Verfahren nach Anspruch 1, wobei die Spule eine wendelförmige Spule ist.

3. Verfahren nach Anspruch 1 oder 2, wobei der Bereich einem magnetischen Reinigungs- bzw. Entmagnetisierungsvorgang unterzogen wird, bevor er Schritt a) unterzogen wird.

4. Verfahren nach Anspruch 3, wobei der magnetische Reinigungs- bzw. Entmagnetisierungsvorgang durchgeführt wird, indem der Bereich durch eine Spule hindurchgeführt wird, die mit Wechselstrom erregt wird.

5. Verfahren nach Anspruch 3, wobei der magnetische Reinigungs- bzw. Entmagnetisierungsvorgang durchgeführt wird, indem der Bereich durch die Spule hindurchgeführt wird, und die Spule mit Wechselstrom erregt wird.

6. Verfahren nach Anspruch 4, wobei nach den Schritten a) und b) der Bereich durch eine Spule hindurchgeführt wird, die mit Wechselstrom einer niedrigeren Stärke und/oder einer höheren Frequenz als der des Stroms erregt wird, der bei dem magnetischen Reinigungs- bzw. Entmagnetisierungsvorgang eingesetzt wird.

7. Verfahren nach Anspruch 5, wobei nach den Schritten a) und b) der Bereich durch die Spule hindurchgeführt wird, und die Spule mit einem Wechselstrom einer niedrigen Stärke und/oder einer höheren Frequenz als der des Stroms erregt wird, der bei dem magnetischen Reinigungs- bzw. Entmagnetisierungsvorgang eingesetzt wird.

8. Vorrichtung zum Herstellen eines Wandlerelementes, das einen Bereich mit Restmagnetisierung aufweist, der in Längsrichtung magnetisiert ist, wobei die Vorrichtung umfasst:
eine Spule, die sich entlang einer Achse erstreckt;
eine Einrichtung, die den Bereich einer Welle oder einen Teil, in dem ein Wandlerelement hergestellt werden soll, in der Spule trägt, wobei die Trageeinrichtung in der Lage ist, relative Drehung zwischen dem Bereich und der Spule um die Achse herum zu bewirken; und
eine Einrichtung, mit der die Spule, während die relative Drehung bewirkt wird, mit einem ersten Gleichstrom einer gegebenen Polarität und höherer Stärke erregt wird, auf den ein zweiter Gleichstrom entgegengesetzter Polarität und niedrigerer Stärke folgt.

9. Vorrichtung nach Anspruch 8, wobei die Spule eine wendelförmige Spule ist.

10. Vorrichtung nach Anspruch 8, wobei die Einrichtung zum Tragen in Funktion die Welle oder den Teil axial relativ zu der Spulenachse tragen kann.

11. Wandlerelement (12) in einer Welle (10) oder einem anderen Teil, wobei das Element einen Bereich (12') gespeicherter Magnetisierung aufweist, der in Längsrichtung magnetisiert ist, der Bereich eine erste ringförmige Zone aufweist, die sich von einer ringförmigen Fläche nach innen erstreckt, wobei die erste Zone in Längsrichtung mit einer gegebenen Polarität in der Richtung einer Achse (A) magnetisiert ist, um die der Ring herum verläuft, und der Bereich eine zweite Zone aufweist, die sich innerhalb der ersten Zone befindet und in der Richtung der Achse mit zu der ersten Zone entgegengesetzter Polarität magnetisiert ist, wobei die erste ringförmige Zone ihre Längsmagnetisierung beibehält, wenn sie wiederholtem Wirken von Drehmoment um die Achse herum ausgesetzt ist, und das Wandlerelement mit einem Verfahren nach einem der Ansprüche 1-7 hergestellt wird.

12. Wandlerelement nach Anspruch 11, wobei die Längsmagnetisierung als Funktion von Drehmoment eine nach außen gerichtete, tangential oder in Umfangsrichtung verlaufende Magnetfeldkomponente ausstrahlt.

## Revendications

1. Procédé pour produire un élément transducteur (12) présentant une zone (12') de magnétisation rémanente qui est magnétisée longitudinalement, comprenant l'étape qui consiste :
à localiser une zone ferromagnétique (12') d'une tige (10) ou d'une autre partie à l'intérieur d'une bobine (60) qui s'étend le long d'un axe (A) ;
**caractérisé par** les étapes qui consistent :
a) à appliquer à la bobine un courant continu d'une polarité donnée ; et
b) après l'étape a), à appliquer à la bobine un courant continu d'une polarité opposée et d'une magnitude inférieure par rapport au courant appliqué lors de l'étape a) ; et
à réaliser une rotation relative de ladite zone et de ladite bobine sur ledit axe au moins pendant l'étape b) ;

2. Procédé tel que revendiqué dans la revendication 1, selon lequel la bobine est une bobine hélicoïdale.

3. Procédé tel que revendiqué dans la revendication 1 ou 2, selon lequel ladite zone est soumise à une opération de démagnétisation avant d'être soumise à l'étape a).

4. Procédé tel que revendiqué dans la revendication 3, selon lequel l'opération de démagnétisation est exécutée grâce au passage de ladite zone à travers une bobine qui est alimentée en courant alternatif.

5. Procédé tel que revendiqué dans la revendication 3, selon lequel l'opération de démagnétisation est exécutée grâce au passage de ladite zone à travers la bobine, la bobine étant alimentée en courant alternatif.

6. Procédé tel que revendiqué dans la revendication 4, selon lequel après les étapes a) et b), ladite zone est passée à travers une bobine qui est alimentée en courant alternatif à une magnitude inférieure et/ou une fréquence supérieure par rapport au courant employé dans l'opération de démagnétisation.

7. Procédé tel que revendiqué dans la revendication 5, selon lequel après les étapes a) et b), ladite zone est passée à travers la bobine, celle-ci étant alimentée en courant alternatif à une magnitude inférieure et/ou une fréquence supérieure par rapport au courant employé dans l'opération de démagnétisation.

8. Appareil pour produire un élément transducteur présentant une zone de magnétisation rémanente qui est magnétisée longitudinalement, comprenant :
une bobine qui s'étend le long d'un axe ;
des moyens pour supporter la zone d'une tige ou une partie dans laquelle un élément transducteur doit être produit à l'intérieur de la bobine, les moyens de support étant aptes à effectuer une rotation relative entre ladite zone et la bobine sur l'axe ; et
des moyens pour alimenter la bobine, pendant la rotation relative, en un premier courant continu d'une polarité donnée et d'une magnitude supérieure, puis en un second courant continu de polarité opposée et de magnitude inférieure, respectivement.

9. Appareil tel que revendiqué dans la revendication 8, dans lequel la bobine est une bobine hélicoïdale.

10. Appareil tel que revendiqué dans la revendication 8, dans lequel les moyens de support sont aptes à déplacer la tige ou la partie axialement par rapport à l'axe de la bobine.

11. Elément transducteur (12) dans une tige (10) ou une autre partie, l'élément ayant une zone (12') de magnétisation accumulée qui est magnétisée longitudinalement, la zone ayant une première zone annulaire qui s'étend vers l'intérieur à partir d'une surface annulaire, ladite première zone étant magnétisée longitudinalement avec une polarité donnée dans la direction d'un axe (A) sur lequel l'anneau s'étend, et une seconde zone qui est située vers l'avant de la première zone et qui est magnétisée dans la direction de l'axe avec une polarité opposée à celle de la première zone, la première zone annulaire gardant sa magnétisation longitudinale quand elle est soumise à des applications répétées de couple sur l'axe, et l'élément transducteur étant produit par un procédé tel que revendiqué dans l'une quelconque des revendications 1 à 7.

12. Elément transducteur tel que revendiqué dans la revendication 11, dans lequel la magnétisation longitudinale dégage une composante de champ magnétique externe à direction tangentielle ou circonférentielle en fonction du couple.
